# EUROPÄISCHE PATENTSCHRIFT

(11) **EP 2 690 457 B1**
(45) Veröffentlichungstag und Bekanntmachung des Hinweises auf die Patenterteilung: **27.09.2017**
(21) Anmeldenummer: 13177626.2
(22) Anmeldetag: 23.07.2013
(51) Int. Cl.: G01S 7/52, G01S 7/521, G01S 15/93, G10K 9/22

(54) **Ultraschallsensoranordnung mit einem in einer Mulde verdeckt angeordneten Ultraschallsensor, Kraftfahrzeug und Verfahren zum Herstellen einer Ultraschallsensoranordnung**
Ultrasound sensor assembly with an ultrasound sensor concealed in a trough, motor vehicle and method for producing an ultrasound sensor assembly
Agencement de capteur à ultrasons comprenant un capteur à ultrasons disposé de façon dissimulée dans une cuvette, véhicule automobile et procédé de fabrication d'un agencement de capteur à ultrasons

(30) Priorität: 24.07.2012 DE 102012106698
(43) Veröffentlichungstag der Anmeldung: 29.01.2014
(73) Patentinhaber: Valeo Schalter und Sensoren GmbH, 74321 Bietigheim-Bissingen (DE)
(72) Erfinder: Wehling, Hans-Wilhelm, 74074 Heilbronn (DE)
(74) Vertreter: Hofstetter, Schurack & Partner

(56) Entgegenhaltungen:
- DE-A1-102006 034 997
- DE-A1-102008 034 152
- DE-A1-102009 034 418
- JP-A- H10 123 236
- US-A- 3 776 361
- US-A1- 2007 079 661

## Beschreibung

Die Erfindung betrifft eine Ultraschallsensoranordnung für ein Kraftfahrzeug, mit einem Verkleidungsteil und zumindest einem Ultraschallsensor, welcher eine Frontseite aufweist und zum Aussenden und/oder Empfangen von Ultraschallsignalen über die Frontseite ausgebildet ist. An einer Rückseite des Verkleidungsteils - diese ist dem Innenraum des Fahrzeugs zugewandt - ist eine Vertiefung und somit eine nichtdurchgängige Aussparung ausgebildet, so dass das Verkleidungsteil im Bereich dieser Vertiefung unterschiedliche Dicken aufweist. Die Frontseite des Ultraschallsensors ist mit einer Oberfläche der Vertiefung in Anlage gebracht, nämlich derart, dass der Ultraschallsensor zum Aussenden und/oder Empfangen der Ultraschallsignale durch das Material des Verkleidungsteils hindurch ausgebildet ist. Die Erfindung betrifft außerdem ein Kraftfahrzeug mit einer solchen Anordnung, wie auch ein Verfahren zum Verstellen einer derartigen Anordnung.

Ultraschallsensoren sind in bekannter Weise im Frontbereich und im Heckbereich des Fahrzeugs, insbesondere an Stoßfängern, verbaut. Sie sind Fahrerassistenzeinrichtungen zugeordnet und liefern Informationen über die Fahrzeugumgebung, nämlich über die Abstände zwischen dem Kraftfahrzeug einerseits und den in seiner Umgebung befindlichen Hindernissen andererseits. Fahrerassistenzeinrichtungen können beispielsweise Parkassistenzsysteme, Systeme zur Todwinkelüberwachung, Systeme zur Abstandshaltung, Spurüberwachungssysteme, Bremsassistenzsysteme und dergleichen sein.

Es ist bereits Stand der Technik, dass derartige Ultraschallwandler in Stoßfängern unverdeckt und somit sichtbar verbaut werden. Dies bedeutet, dass sie in durchgängigen Aussparungen in dem Stoßfänger angeordnet sind und außenseitig sichtbar sind. Eine topfförmige Membran des Ultraschallsensors erstreckt sich hier durch die durchgängige Aussparung des Stoßfängers hindurch, so dass die Frontseite der Membran, über welche Ultraschallwellen ausgesendet und empfangen werden, bündig mit der äußeren Oberfläche des Stoßfängers abschließt. Diese Ultraschallsensoren haben jedoch den entscheidenden Nachteil, dass sie sichtbar angeordnet sind und somit das gesamte optische Bild des Kraftfahrzeugs beeinträchtigen.

Deshalb richtet sich das Interesse vorliegend auf verdeckt bzw. versteckt verbaute Ultraschallwandler, welche bei einer Betrachtung des Stoßfängers von außen nicht sichtbar und durch den Stoßfänger abgedeckt sind. Hier befindet sich der Ultraschallsensor an einer Rückseite des Stoßfängers, so dass die Frontseite der Membran - gegebenenfalls über einen zusätzlichen Montagedeckel - mit der Rückseite des Stoßfängers in Anlage gebracht ist. Bei derartig verbauten Ultraschallsensoren direkt hinter dem Stoßfänger werden die Ultraschallsignale durch das Material des Stoßfängers hindurch gesendet und empfangen. Somit schwingt ein Bereich des Stoßfängers zusammen mit der Membran. Es ist somit oft erforderlich, dass dieser schwingende Bereich des Stoßfängers mit Hilfe eines aus Keramik gebildeten Versteifungselements begrenzt wird. Es ist beispielsweise bekannt, ein aus Keramik gebildetes Versteifungselement bereitzustellen, welches eine Durchgangsöffnung aufweist, durch welche sich die topfförmige Membran des Ultraschallsensors hindurch erstreckt, so dass das Versteifungselement um die Membran herum angeordnet ist und außerdem - gegebenenfalls über einen Montagedeckel - mit der Rückseite des Stoßfängers in Anlage gebracht ist. Somit sind bei verdeckt hinter dem Stoßfänger verbauten Sensoren jedoch wesentlich höhere Anforderungen an die Positionierung, die Klebung und die nun einzuhaltenden Toleranzen gegeben. Der Ultraschallsensor muss hinter dem Stoßfänger mechanisch fest angebracht werden. Dies ist erforderlich, damit der Ultraschallsensor verlustfrei durch den Stoßfänger senden kann. Um die Sende- und Empfangsverluste gering zu halten, muss die Sendefläche des Ultraschallsensors - also die Frontfläche der Membran - mechanisch fest mit dem Stoßfänger verbunden werden oder aber mit einem verlustfreien Koppelelement bzw. Montagedeckel zwischen der Frontseite der Membran und dem Stoßfänger ausgebildet werden. Um die eingeleiteten Schwingungen lokal zu halten und die Senderichtcharakteristik zu beeinflussen, wird dazu das oben genannte Versteifungselement mit einem großen E-Modul eng um den Wandler bzw. um die Membran benötigt. Auch dieser Versteifungsring muss mechanisch fest mit dem Stoßfänger bzw. dem Halter verbunden sein.

Eine verdeckte Anordnung eines elektroakustischen Wandlers ist beispielsweise aus der Druckschrift DE 42 38 924 A1 bekannt.

Eine gattungsgemäße Ultraschallsensoranordnung ist außerdem aus dem Dokument DE 10 2006 034 997 A1 bekannt. Wie insbesondere aus Fig. 6 dieses Dokuments hervorgeht, ist der Stoßfänger hier mit einer Aussparung bzw. Vertiefung ausgebildet, welche in Form eines kegelstumpfartigen Konus und somit in abgeflachter Kegelform ausgebildet ist. An einer Oberfläche dieser Vertiefung bzw. an der Rückseite des Stoßfängers liegt ein Ultraschallsensor an, so dass die Ultraschallwellen durch den Stoßfänger hindurch ausgesendet und empfangen werden. Im Bereich der Vertiefung ist der Stoßfänger also mit unterschiedlichen Dicken ausgebildet, so dass eine der Rückseite gegenüberliegende und somit von außen sichtbare Vorderseite des Stoßfängers eben ausgebildet ist. Bei Ultraschallsensoren ist es jedoch oft erforderlich, dass diese bezüglich der Horizontalen unter einem Winkel größer als 0° geneigt positioniert werden müssen. Diese Neigung soll in der Regel von 1° bis 3° bezüglich der Horizontalen bzw. bezüglich der Fahrbahnebene betragen, und zwar derart, dass der Ultraschallsensor mit seiner Längsachse nach oben ausgerichtet ist. Eine solche geneigte Anordnung der Ultraschallsensoren lässt sich im Stand der Technik entlang der gesamten Breite des Stoßfängers nicht gleich für alle Ultraschallsysteme realisieren. Dies ist insbesondere aufgrund der teilweise unterschiedlichen Krümmung des Stoßfängers an unterschiedlichen Einbaupositionen des Ultraschallsensors sehr aufwändig. Somit ist man im Stand der Technik dazu gezwungen, bei ein und demselben Fahrzeug unterschiedlich gestaltete Ultraschallsensoren einzusetzen, was mit erhöhten Kosten verbunden ist. Eine geneigte Anordnung des Ultraschallsensors lässt sich auch im Gegenstand gemäß Dokument DE 10 2006 034 997 A1 nicht ohne viel Aufwand realisieren.

Aus der DE 10 2008 034 152 A1 ist ein an einem Stoßfänger verbauter Ultraschallsensor bekannt. Entsprechendes ist auch aus der DE 10 2009 034 418 A1 und der US 3 776 361 A bekannt. Aus der DE 10 2006 034 997 A1 ist eine Ultraschallsensorvorrichtung in verdeckter Bauweise bekannt, bei welcher der Stoßfänger im Bereich des Ultraschallsensors mehrteilig ausgebildet ist. Aus der JP H10 123236 und der US 2007/079661 A1 sind ebenfalls verdeckte Anordnungen eines Ultraschallsensors an einem Stoßfänger bekannt.

Es ist Aufgabe der Erfindung, einen Weg aufzuzeigen, wie bei einer Ultraschallsensoranordnung der eingangs genannten Gattung eine hochflexible und bedarfsabhängige Positionierung des Ultraschallsensors an dem zugeordneten Verkleidungsteil ermöglicht werden kann.

Diese Aufgabe wird erfindungsgemäß durch eine Ultraschallsensoranordnung, durch ein Kraftfahrzeug, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine Ultraschallsensoranordnung für ein Kraftfahrzeug umfasst ein Verkleidungsteil sowie einen Ultraschallsensor, welcher Ultraschallsignale durch seine Frontseite aussendet und/oder empfängt. An einer dem Innenraum des Fahrzeugs zugewandten und somit von außen nicht sichtbaren Rückseite des Verkleidungsteils ist eine nichtdurchgängige Aussparung und somit eine Vertiefung ausgebildet, nämlich derart, dass zur Ausbildung dieser Vertiefung das Verkleidungsteil mit unterschiedlichen Dicken ausgebildet ist. Die Frontseite des Ultraschallsensors ist mit einer Oberfläche der Vertiefung - also mit der die Vertiefung begrenzenden Oberfläche der Rückseite des Verkleidungsteils - in Anlage gebracht, so dass der Ultraschallsensor die Ultraschallsignale durch das Verkleidungsteil hindurch aussendet und/oder empfängt. Erfindungsgemäß ist vorgesehen, dass die Oberfläche der Vertiefung konkav gekrümmt ausgebildet ist.

Durch eine solche Ausgestaltung der Vertiefung im Verkleidungsteil wird ermöglicht, den Ultraschallsensor unterschiedlich bzw. mit verschiedenen Neigungswinkeln zu platzieren, so dass insgesamt eine bedarfsabhängige und hochflexible Anordnung gewährleistet wird. So kann der Ultraschallsensor beispielsweise mit seiner Längsachse geneigt zur Horizontalen angeordnet werden, was bei manchen Ultraschallsystemen erforderlich ist. Bei anderen Systemen, bei denen eine solche Neigung wiederum nicht erforderlich ist, können gleiche Ultraschallsensoren verwendet werden. Die Anzahl der benötigten Sensortypen wird somit auf ein Minimum reduziert.

Vorzugsweise ist vorgesehen, dass die Oberfläche der Vertiefung vollständig gekrümmt ausgebildet ist und somit keine ebenen Bereiche bzw. keine geraden Abschnitte aufweist.

Die Vertiefung ist also dadurch gebildet, dass das Verkleidungsteil unterschiedliche Dicken aufweist. Insbesondere verjüngt sich das Verkleidungsteil also hin zu einem Zentrum der Vertiefung, so dass in dem Zentrum der Vertiefung das Verkleidungsteil die minimale Dicke aufweist, während die maximale Dicke des Verkleidungsteils am Rande der Vertiefung bzw. radial außerhalb der Vertiefung gegeben ist. Mit anderen Worten stellt die Vertiefung eine Mulde dar, in welche die Frontseite des Ultraschallsensors aufgenommen ist.

In einer Ausführungsform ist die Oberfläche der Vertiefung als Oberflächenbereich einer Kugel ausgebildet. Dies bedeutet, dass die Krümmung der Vertiefung einen einheitlichen Radius aufweist. Somit kann ohne viel Aufwand eine bedarfsabhängige Positionierung des Ultraschallsensors ermöglicht werden, und außerdem kann somit das Verkleidungsteil mit geringem technischen Aufwand hergestellt werden, indem beispielsweise ein solcher Kugelbereich in dem Verkleidungsteil gefräst oder aber durch Spritzgießen des Verkleidungsteils gebildet wird.

Vorzugsweise ist auch die Frontseite des Ultraschallsensors gekrümmt ausgebildet, und zwar konvex gekrümmt. Somit ist die Frontseite des Ultraschallsensors an die Form der Vertiefung des Verkleidungsteils angepasst, so dass eine zuverlässige Anlage der Frontseite an der Rückseite des Verkleidungsteils und somit auch eine zuverlässige und wirkungsvolle Übertragung der mechanischen Schwingung gewährleistet werden.

Die Oberfläche der Vertiefung kann dabei mit einer kleineren Krümmung als die Frontseite des Ultraschallsensors ausgebildet werden. Dies bedeutet, dass die Krümmung der Vertiefung des Verkleidungsteils einen größeren Radius als die Krümmung der Frontseite des Ultraschallsensors aufweist. Dies hat dann zur Folge, dass die Frontseite des Ultraschallsensors nicht vollständig an der Oberfläche der Vertiefung anliegt bzw. die Vertiefung nicht vollständig von dem Ultraschallsensors bedeckt ist. Bei dieser Ausführungsform ist also nur ein zentraler Flächenbereich der Frontseite des Ultraschallsensors mit der Oberfläche der Vertiefung in Anlage gebracht. Somit wird eine besonders aufwandsarme Positionierung des Ultraschallsensors mit verschiedensten Neigungswinkeln bezüglich der Horizontalen ermöglicht.

Alternativ kann jedoch auch vorgesehen sein, dass die Krümmung der Oberfläche der Vertiefung komplementär mit der Krümmung der Frontseite des Ultraschallsensors ausgebildet ist, so dass die Frontseite des Ultraschallsensors vollflächig an der Oberfläche der Vertiefung anliegt. Bei dieser Ausführungsform weist die Krümmung der Vertiefung also den gleichen Radius wie die Krümmung der Frontseite des Ultraschallsensors auf, und es ist eine vollständige bzw. vollflächige Anlage der Frontseite des Sensors an der Rückseite des Verkleidungsteils gegeben. Dies hat den Vorteil, dass eine besonders zuverlässige Schallübertragung aufgrund einer großflächigen und festen Verbindung zwischen dem Ultraschallsensor und dem Verkleidungsteil gewährleistet ist.

Es kann vorgesehen sein, dass eine Längsachse des Ultraschallsensors, welche mit einer Hauptsende- und/oder -empfangsrichtung des Sensors zusammenfällt, in einem ordnungsgemäßen und verbauten Zustand der Ultraschallsensoranordnung in einem Winkel größer als 0° bezüglich einer Horizontalen bzw. bezüglich einer Fahrbahnebene geneigt angeordnet ist. Dieser Winkel zwischen der Längsachse des Ultraschallsensors und der Horizontalen kann beispielsweise in einem Wertebereich von 1° bis 4° liegen.

Dies bedeutet, dass die Längsachse des Ultraschallsensors bezüglich einer Mittenebene des Verkleidungsteils in einem Winkel ungleich 90° geneigt angeordnet ist. Eine solche geneigte Anordnung des Ultraschallsensors ist bei manchen Ultraschallsystemen besonders vorteilhaft, um die gewünschte Reichweite und Richtcharakteristik des Ultraschallsensors erreichen zu können und außerdem auch Bodenreflektionen zu minimieren. Eine solche Ausrichtung des Ultraschallsensors erweist sich also insbesondere in Kombination mit der konkav gekrümmten Vertiefung des Verkleidungsteils als besonders vorteilhaft. Bei einer solchen Ausgestaltung des Verkleidungsteils kann der Ultraschallsensor nämlich ohne viel Aufwand geneigt positioniert werden, ohne dass unterschiedliche Sensortypen bereitgestellt werden müssen.

Vorzugsweise liegt eine maximale Dicke des Verkleidungsteils - insbesondere direkt neben der Vertiefung - in einem Wertebereich von 2,8 mm bis 3,2 mm. Dies entspricht grundsätzlich der Standarddicke eines Stoßfängers bzw. eines anderen Verkleidungsteils eines Fahrzeugs, so dass das Verkleidungsteil nicht in aufwändiger Weise umgestaltet zu werden braucht. Somit bleibt das Verkleidungsteil stabil. Die maximale Dicke kann dabei beispielsweise 3 mm betragen.

Demgegenüber liegt eine minimale Dicke des Verkleidungsteils - insbesondere im Zentrum der Vertiefung - in einem Wertebereich von 1,8 mm bis 2,2 mm. Durch eine solche lokale dünnere Wanddicke wird das Verkleidungsteil bzw. seine Stabilität nicht beeinträchtigt. Aufgrund einer solchen Dicke im Zentrum der Vertiefung ist außerdem auch eine aufgrund der Neigung des Ultraschallsensors gegebene erhöhte Dicke des Verkleidungsteils vertretbar, welche durch den Ultraschallsensor "gesehen" wird bzw. durch welche der Ultraschallsensor seine Ultraschallwellen aussendet bzw. empfängt. Die genannte minimale Dicke kann dabei beispielsweise 2 mm betragen.

Es kann auch vorgesehen sein, dass eine der Rückseite gegenüberliegende Vorderseite des Verkleidungsteils eben ausgebildet ist. Auch bei einer solchen ebenen Vorderseite des Verkleidungsteils und einer außer der Vertiefung grundsätzlich ebenen Rückseite des Verkleidungsteils kann somit durch die gekrümmte Vertiefung gewährleistet werden, dass der Ultraschallsensor geneigt platziert werden kann.

In einer Ausführungsform umfasst der Ultraschallsensor einen Ultraschallwandler mit einer topfförmigen Membran zum Aussenden und/oder Empfangen der Ultraschallwellen sowie einen von dem Ultraschallwandler separaten Halter, über welchen der Ultraschallwandler an der Rückseite des Verkleidungsteils befestigt ist. Bei dieser Ausführungsform ist die Frontseite des Ultraschallsensors durch eine Vorderseite des Halters gebildet. Die Bereitstellung eines von dem Wandler separaten Halters hat den Vorteil, dass der gesamte Ultraschallsensors an unterschiedliche geometrische Formen des Verkleidungsteils angepasst werden kann, indem beispielsweise lediglich die Form des Halters situationsabhängig und bedarfsgerecht entsprechend gestaltet wird, während jeweils gleiche Ultraschallwandler eingesetzt werden.

Bevorzugt ist das Verkleidungsteil ein Stoßfänger für das Kraftfahrzeug.

Ein erfindungsgemäßes Kraftfahrzeug umfasst eine erfindungsgemäße Ultraschallsensoranordnung.

Die Erfindung betrifft auch ein Verfahren zum Herstellen einer Ultraschallsensoranordnung für ein Kraftfahrzeug durch Bereitstellen eines Verkleidungsteils und zumindest eines Ultraschallsensors mit einer Frontseite, über welche Ultraschallsignale durch den Ultraschallsensor ausgesendet und/oder empfangen werden, wobei an einer Rückseite des Verkleidungsteils eine Vertiefung ausgebildet wird, indem das Verkleidungsteil mit unterschiedlichen Dicken ausgebildet wird, und wobei die Frontseite des Ultraschallsensors mit einer Oberfläche der Vertiefung in Anlage gebracht wird, so dass der Ultraschallsensor die Ultraschallsignale durch das Verkleidungsteil hindurch sendet und/oder empfängt. Die Oberfläche der Vertiefung wird konkav gekrümmt ausgebildet.

Das Verkleidungsteil kann als Spritzgussteil ausgebildet werden, so dass die Vertiefung durch das Spritzgießen gebildet wird. Alternativ kann die Vertiefung an der Rückseite des Verkleidungsteils gefräst werden.

Die mit Bezug auf die erfindungsgemäße Ultraschallsensoranordnung vorgestellten bevorzugten Ausführungsformen und deren Vorteile gelten entsprechend für das erfindungsgemäße Kraftfahrzeug sowie für das erfindungsgemäße Verfahren und umgekehrt.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung eine Explosionsansicht eines Ultraschallsensors gemäß einer Ausführungsform der Erfindung;
- Fig. 2: in schematischer Darstellung der Ultraschallsensor aus einem anderen Blickwinkel;
- Fig. 3: in schematischer Darstellung eine Seitenansicht des Ultraschallsensors im zusammengebauten Zustand; und
- Fig. 4: in schematischer Darstellung eine Seitenansicht bzw. teilweise Schnittdarstellung einer Ultraschallsensoranordnung gemäß einer Ausführungsform der Erfindung.

In den Figuren werden gleiche oder funktionsgleiche Elemente mit den gleichen Bezugszeichen versehen.

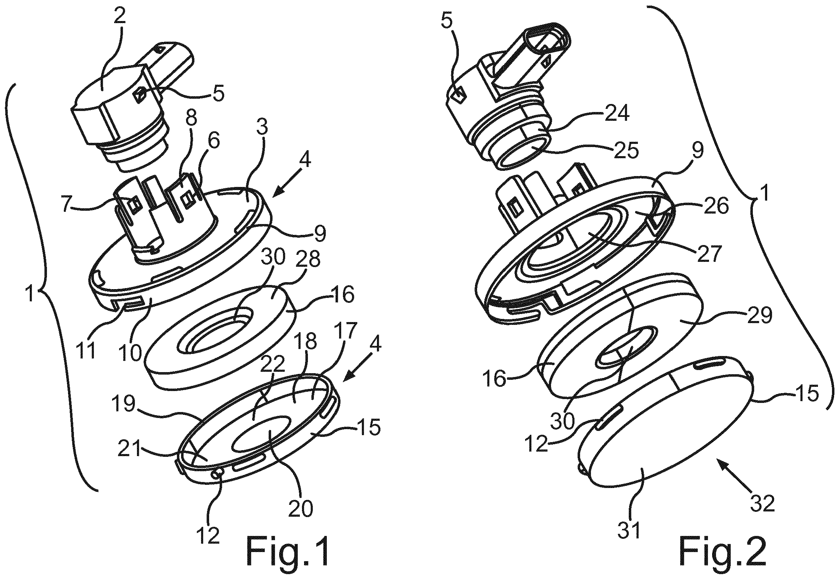

In Fig. 1 ist in einer Explosionsdarstellung ein Ultraschallsensor 1 für ein Kraftfahrzeug, insbesondere einen Personenkraftwagen, gezeigt. Dieser umfasst einen Ultraschallwandler 2, der zerstörungsfrei lösbar in einem Aufnahmeteil 3 eines Halters 4 befestigbar, insbesondere verrastbar, ist. Dazu sind beispielsweise zwei Rastelemente 5 ausgebildet, die zur Verrastung in korrespondierenden Rastlaschen 6, 7 eines Aufnahmeschachts 8 des einstückig aus Kunststoff ausgebildeten Aufnahmeteils 3 vorgesehen sind.

Das Aufnahmeteil 3 umfasst darüber hinaus einen Untersatz 9, welcher zylinderförmig ausgebildet ist und einen größeren Durchmesser als der Aufnahmeschacht 8 aufweist. An einem Rand 10 des Untersatzes 9 ist ebenfalls eine Rastaufnahme 11 ausgebildet, in welche ein Rastelement 12 eines scheibenförmigen und kreisförmigen Montagedeckels 15 verrasten kann. Der Montagedeckel 15 ist einstückig aus Kunststoff ausgebildet und durch die Verrastung mit dem Aufnahmeteil 3 auch zerstörungsfrei und reversibel lösbar mit diesem verbunden. Durch den Montagedeckel 15 und das Aufnahmeteil 3 ist der Halter 4 zweiteilig gebildet. Dadurch kann eine hochflexible und variable Ausgestaltung des Ultraschallsensors 1 gewährleistet werden und unterschiedlichste Einbaumöglichkeiten des Sensors 1 an verschiedensten Einbausituationen an einem Verkleidungsteil eines Fahrzeugs ermöglicht werden.

Der Ultraschallsensor 1 umfasst im Ausführungsbeispiel auch ein Versteifungselement 16, welches als Ring ausgebildet ist. Das Versteifungselement 16 ist als separates Bauteil ausgebildet und beispielsweise aus Keramik. Das Versteifungselement 16 dient einerseits zur Dämpfung der Schwingungsübertragung auf das Verkleidungsteil, andererseits dient es zur Begrenzung der Signalabstrahlung des Ultraschallwandlers 2.

Der Montagedeckel 15 weist auf seiner dem Ultraschallwandler 2 zugewandten Rückseite 17 eine Vertiefung 18 auf, welche umfangsseitig und umlaufend durch einen Steg 19 begrenzt ist, an welchem das Rastelement 12 und auch weitere Rastelemente zur Verrastung mit dem Aufnahmeteil 3 ausgebildet sind. Im verbauten Zustand erstreckt sich der Ultraschallwandler 2 in die Vertiefung 18 hinein. Der Montagedeckel 15 weist auf seiner dem Ultraschallwandler 2 zugewandten Rückseite 17 einen Boden der Vertiefung 18 auf, der einerseits durch einen eben ausgebildeten kreisförmigen zentralen Flächenbereich 20 und einen radial nach außen daran anschließenden Aufnahmebereich 21 mit einer Anlagefläche 22 für die Anlage des Versteifungselements 16 gebildet ist.

In Fig. 2 ist eine Explosionsdarstellung des Ultraschallsensors 1 mit einer anderen Blickrichtung gezeigt. Der Ultraschallwandler 2 weist eine topfförmige und aus Aluminium gebildete Membran 24 auf, welche eine Frontseite 25 bzw. eine Frontfläche aufweist, über welche die Ultraschallwellen ausgesendet und empfangen werden. Die Frontseite 25 weist also eine ebene Fläche auf, die in Anlage mit dem zentralen Flächenbereich 20 der Rückseite 17 des Montagedeckels 15 kommt und entsprechend verklebt ist.

Darüber hinaus ist in der Darstellung gemäß Fig. 2 zu erkennen, dass der Untersatz 9 an seiner inneren Frontseite bzw. Oberseite eine Nut bzw. Aufnahme 26 aufweist, die zur Aufnahme des Versteifungselements 16 ausgebildet ist. Auch dieser Untersatz 9 weist eine Durchgangsöffnung 27 auf, durch welche sich die Membran 24 des Ultraschallsensors 2 hindurch erstreckt, um in Anlage mit dem zentralen Flächenbereich 20 gelangen zu können.

Im gezeigten Ausführungsbeispiel ist vorgesehen, dass das Versteifungselement 16 eine Rückseite 28 (Fig. 1) aufweist, welche beispielsweise eben ausgebildet ist. Diese kommt dann vollflächig in Anlage mit dem Boden der Nut 26.

Darüber hinaus weist das Versteifungselement 16 eine Vorderseite 29 auf, die dem Montagedeckel 15 zugewandt ist. Die Vorderseite 29 des Versteifungselements 16 kommt im zusammengebauten Zustand in vollflächige Anlage mit der komplementären Anlagefläche 22 des Montagedeckels 15.

Der Montagedeckel 15 weist eine Vorderseite 31 auf, welche individuell geformt ist und zwar dahingehend, dass sie vorzugsweise zur vollflächigen Anlage an eine Rückseite eines Verkleidungsteils, beispielsweise eines Stoßfängers des Fahrzeugs, ausgebildet ist. Dies bedeutet, dass der Montagedeckel 15 mit seiner Vorderseite 31 in Anlage mit der Rückseite des Verkleidungsteils gebracht wird, so dass die Ultraschallwellen durch diesen Montagedeckel 15 sowie durch das Verkleidungsteil hindurch gesendet und empfangen werden.

Mit weiterem Bezug auf Fig. 2 stellt die Vorderseite 31 des Montagedeckels 15 gleichzeitig auch eine Frontseite 32 des gesamten Ultraschallsensors 1 dar. Dies bedeutet, dass über diese Frontseite 32 die Ultraschallwellen ausgesendet bzw. empfangen werden. Die Membran 24 des Wandlers 2 liegt nämlich an dem zentralen Flächenbereich 20 der Rückseite 17 des Montagedeckels 15 an, so dass durch diesen Montagedeckel 15 hindurch und somit durch die Frontseite 32 hindurch die Ultraschallsignale gesendet bzw. empfangen werden.

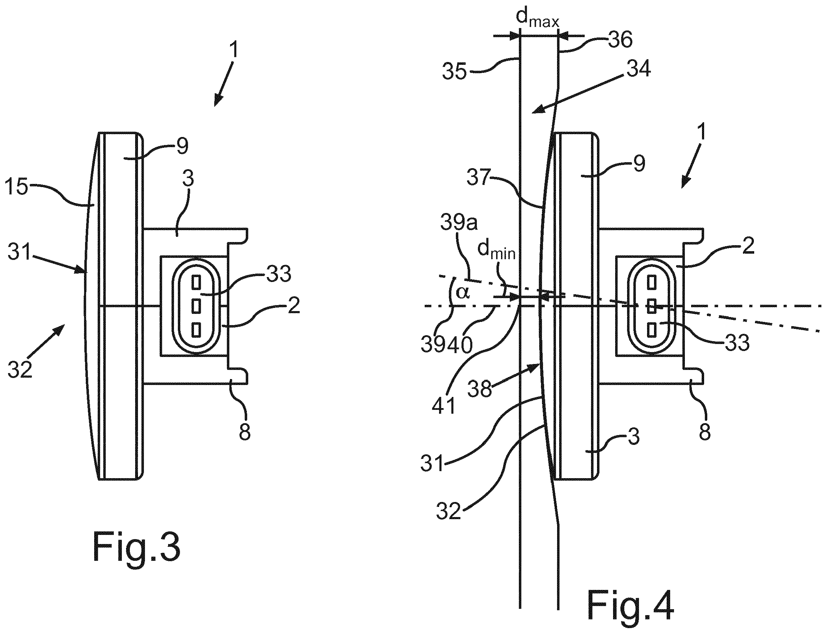

Im Ausführungsbeispiel ist nun vorgesehen, dass die Frontseite 32 bzw. die Vorderseite 31 des Montagedeckels 15 konvex gekrümmt ausgebildet ist und die Form eines Oberflächenbereiches einer Kugel mit einem definierten Durchmesser aufweist. Diese Ausgestaltung des Montagedeckels 15 ist in Fig. 3 anhand der dort gezeigten Seitenansicht des Ultraschallsensors 1 näher dargestellt. Mit anderen Worten ist die Vorderseite 31 des kreisförmigen Montagedeckels 15 bauchartig bzw. in Form eines Gewölbes ausgebildet. Wie aus Fig. 3 weiterhin zu erkennen ist, weist der Ultraschallwandler 2 einen Stecker 33, über welchen der Wandler 2 mit einer elektronischen Steuereinrichtung elektrisch gekoppelt werden kann.

Eine Anordnung gemäß einer Ausführungsform der Erfindung ist in Fig. 4 näher dargestellt. Neben dem Ultraschallsensor 1 gemäß Fig. 3 ist hier auch ein Verkleidungsteil 34 dargestellt, welches im Ausführungsbeispiel ein Stoßfänger eines Personenkraftwagens ist. Das Verkleidungsteil 34 hat eine Vorderseite 35 sowie eine Rückseite 36. Die Rückseite 36 ist im verbauten Zustand dem Innenraum des Fahrzeugs zugewandt, während die Vorderseite 35 eine Außenseite darstellt, welche von außen sichtbar ist.

An der Rückseite 36 ist eine Vertiefung 37 im Verkleidungsteil 34 ausgebildet. Diese Vertiefung 37 ist eine Aussparung bzw. Mulde mit einer konkaven Krümmung. Dies bedeutet, dass eine Oberfläche 38 der Vertiefung 37 zum Ultraschallsensor 1 hin konkav gekrümmt ausgebildet ist. Im Ausführungsbeispiel hat die Oberfläche 38 die Form eines Oberflächenbereiches einer Kugel mit einem definierten Radius. Dieser Radius kann dabei gleich dem Radius der Krümmung der Frontseite 32 des Ultraschallsensors 1 sein; alternativ kann der Radius der Krümmung der Vertiefung 37 größer als der Radius der Frontseite 32 sein, was bedeutet, dass die Krümmung der Vertiefung 37 geringer sein kann als die Krümmung der Frontseite 32.

Die Frontseite 32 des Ultraschallsensors 1 liegt dabei vollflächig oder zumindest überwiegend an der Oberfläche 38 der Vertiefung 37 an. Durch diese Anlage wird eine zuverlässige Schallübertragung ermöglicht. Die Verbindung kann hier als Klebeverbindung realisiert werden.

Also liegt die Frontseite 32 des Ultraschallsensors 1 in der Vertiefung 37 des Verkleidungsteils 34. Dabei kann auch vorgesehen sein, dass eine Längsachse 39 des Ultraschallsensors 1 mit der Horizontalen 40 zusammenfällt, wie dies in Fig. 4 dargestellt ist, oder aber einen Winkel α mit der Horizontalen 40 einschließt, wie dies in Fig. 4 anhand einer Hilfslinie 39a schematisch dargestellt ist. Der Ultraschallsensor 1 kann also so geneigt positioniert werden, dass seine Längsachse 39a unter dem Winkel α bezüglich der Horizontalen 40 liegt, wobei der Winkel α beispielsweise in einem Wertebereich von 1° bis 4° liegen kann und beispielsweise 2° oder 3° betragen kann.

Die Längsachse 39, 39a des Ultraschallsensors 1 entspricht dabei einer Hauptsenderichtung des Wandlers 2, in welche die Ultraschallwellen ausgesendet werden.

Wie aus Fig. 4 hervorgeht, ist die Vorderseite 35 des Verkleidungsteils 34 im Ausführungsbeispiel eben ausgebildet und weist im Bereich der Vertiefung 37 unterschiedliche Dicken auf. Eine maximale Dicke dₘₐₓ weist das Verkleidungsteil 34 im Bereich neben der Vertiefung 37 bzw. im Randbereich der kreisförmigen Vertiefung 37 auf. Diese maximale Dicke dₘₐₓ kann beispielsweise 3 mm betragen. Eine minimale Dicke dₘᵢₙ weist das Verkleidungsteils 34 in einem Zentrum 41 der Vertiefung 37 auf, also genau an der Stelle, an welcher die Vertiefung 37 ihre maximale Tiefe aufweist. Die minimale Dicke dₘᵢₙ beträgt im Ausführungsbeispiel 2 mm. Insgesamt wird somit die Stabilität des Verkleidungsteils 34 aufrechterhalten, und es wird trotz der schrägen Positionierung des Ultraschallsensors 1 unter dem Winkel α eine zuverlässige Ausbreitung der Ultraschallwellen gewährleistet.

Bei der Herstellung des Verkleidungsteils 34 kann die Vertiefung 37 beispielsweise direkt beim Spritzgießen des Verkleidungsteils 34 gebildet werden. Alternativ kann jedoch das Verkleidungsteil 34 als Spritzgussteil nachträglich so umgestaltet werden, dass die Vertiefung 37 ausgebildet wird. Dies kann beispielsweise durch Fräsen erfolgen.

## Patentansprüche

1. Ultraschallsensoranordnung für ein Kraftfahrzeug, mit einem Verkleidungsteil (34) und zumindest einem Ultraschallsensor (1), welcher eine Frontseite (32) aufweist und zum Aussenden und/oder Empfangen von Ultraschallsignalen über die Frontseite (32) ausgebildet ist, wobei an einer Rückseite (36) des Verkleidungsteils (34) eine Vertiefung (37) ausgebildet ist und das Verkleidungsteil (34) im Bereich der Vertiefung (37) unterschiedliche Dicken (dₘₐₓ, dₘᵢₙ) aufweist, und wobei die Frontseite (32) des Ultraschallsensors (1) mit einer Oberfläche (38) der Vertiefung (37) in Anlage gebracht ist, sodass der Ultraschallsensor (1) zum Aussenden und/oder Empfangen der Ultraschallsignale durch das Verkleidungsteil (34) hindurch ausgebildet ist,
**dadurch gekennzeichnet, dass**
die Oberfläche (38) der Vertiefung (37) konkav gekrümmt ausgebildet ist, und die Oberfläche (38) der Vertiefung (37) als Oberflächenbereich einer Kugel ausgebildet ist, sodass der Ultraschallsensor (1) mit verschiedenen Neigungswinkeln platziert werden kann, um mit seiner Längsachse geneigt zur Horizontalen angeordnet werden zu könnten.

2. Ultraschallsensoranordnung nach Anspruch 1,
**dadurch gekennzeichnet, dass**
die Frontseite (32) des Ultraschallsensors (1) konvex gekrümmt ausgebildet ist.

3. Ultraschallsensoranordnung nach Anspruch 2,
**dadurch gekennzeichnet, dass**
die Oberfläche (38) der Vertiefung (37) mit einer kleineren Krümmung als die Frontseite (32) des Ultraschallsensors (1) ausgebildet ist.

4. Ultraschallsensoranordnung nach Anspruch 2,
**dadurch gekennzeichnet, dass**
die Krümmung der Oberfläche (38) der Vertiefung (37) komplementär mit der Krümmung der Frontseite (32) des Ultraschallsensors (1) ausgebildet ist, sodass die Frontseite (32) vollflächig an der Oberfläche (38) der Vertiefung (37) anliegt.

5. Ultraschallsensoranordnung nach einem der vorhergehenden Ansprüche,
**dadurch gekennzeichnet, dass**
der Ultraschallsensor (1) eine Längsachse (39, 39a) aufweist, welche in einem Winkel (α) größer 0° bezüglich einer Horizontalen (40) geneigt angeordnet ist, insbesondere in einem Winkel von 1° bis 4°.

6. Ultraschallsensoranordnung nach einem der vorhergehenden Ansprüche,
**dadurch gekennzeichnet, dass**
eine maximale Dicke (dₘₐₓ) des Verkleidungsteils (34) in einem Wertebereich von 2,8 mm bis 3,2 mm liegt.

7. Ultraschallsensoranordnung nach einem der vorhergehenden Ansprüche,
**dadurch gekennzeichnet, dass**
eine minimale Dicke (dₘᵢₙ) des Verkleidungsteils (34) in einem Wertebereich von 1,8 mm bis 2,2 mm liegt.

8. Ultraschallsensoranordnung nach einem der vorhergehenden Ansprüche,
**dadurch gekennzeichnet, dass**
eine der Rückseite (36) gegenüberliegende Vorderseite (35) des Verkleidungsteils (34) eben ausgebildet ist.

9. Ultraschallsensoranordnung nach einem der vorhergehenden Ansprüche,
**dadurch gekennzeichnet, dass**
der Ultraschallsensor (1) einen Ultraschallwandler (2) mit einer topfförmigen Membran (24) zum Aussenden und/oder Empfangen der Ultraschallwellen sowie einen von dem Ultraschallwandler (2) separaten Halter (3) aufweist, über welchen der Ultraschallwandler (2) an der Rückseite (36) des Verkleidungsteils (34) befestigt ist, wobei die Frontseite (32) des Ultraschallsensors (1) durch eine Vorderseite (31) des Halters (3) gebildet ist.

10. Ultraschallsensoranordnung nach einem der vorhergehenden Ansprüche,
**dadurch gekennzeichnet, dass**
das Verkleidungsteil (34) ein Stoßfänger ist.

11. Kraftfahrzeug mit einer Ultraschallsensoranordnung nach einem der vorhergehenden Ansprüche.

12. Verfahren zum Herstellen einer Ultraschallsensoranordnung für ein Kraftfahrzeug durch Bereitstellen eines Verkleidungsteils (34) und zumindest eines Ultraschallsensors (1) mit einer Frontseite (32), über welche Ultraschallsignale durch den Ultraschallsensor (1) ausgesendet und/oder empfangen werden, wobei an einer Rückseite (36) des Verkleidungsteils (34) eine Vertiefung (37) ausgebildet wird, indem das Verkleidungsteil (34) mit unterschiedlichen Dicken (dmax, dmin) ausgebildet wird, und wobei die Frontseite (32) des Ultraschallsensors (1) mit einer Oberfläche (38) der Vertiefung (37) in Anlage gebracht wird, sodass der Ultraschallsensor (1) die Ultraschallsignale durch das Verkleidungsteil (34) hindurch sendet und/oder empfängt,
**dadurch gekennzeichnet, dass**
die Oberfläche (38) der Vertiefung (37) konkav gekrümmt und die Oberfläche (38) der Vertiefung (37) als Oberflächenbereich einer Kugel ausgebildet wird, sodass der Ultraschallsensor (1) mit verschiedenen Neigungswinkeln platziert werden kann, um mit seiner Längsachse geneigt zur Horizontalen angeordnet werden zu können.

13. Verfahren nach Anspruch 12,
**dadurch gekennzeichnet, dass**
das Verkleidungsteil (34) als Spritzgussteil ausgebildet wird und die Vertiefung (37) durch das Spritzgießen gebildet wird.

14. Verfahren nach Anspruch 12,
**dadurch gekennzeichnet, dass**
die Vertiefung (37) an der Rückseite (36) des Verkleidungsteils (34) gefräst wird.

## Claims

1. Ultrasonic sensor arrangement for a motor vehicle, comprising a cladding part (34) and at least one ultrasonic sensor (1), which comprises a front side (32) and is configured for emitting and/or receiving ultrasonic sensor signals via the front side (32), wherein on a rear side (36) of the cladding part (34) an indentation (37) is configured and the cladding part (34) in the area of the indentation (37) has different thicknesses (dₘₐₓ₁, dₘᵢₙ₁), and wherein the front side (32) of the ultrasonic sensor (1) is brought into contact with a surface (38) of the indentation (37) so that the ultrasonic sensor (1) is configured for emitting and/or receiving the ultrasonic signals through the cladding part (34),
**characterized in that**
the surface (38) of the indentation (37) is configured to be curved concave, and the surface (38) of the indentation (37) is configured as surface area of a ball so that the ultrasonic sensor (1) can be placed with various inclination angles in order to be able to be arranged with its longitudinal axis tilted relative to the horizontal.

2. Ultrasonic sensor arrangement according to claim 1,
**characterized in that**
the front side (32) of the ultrasonic sensor (1) is configured to be convex curved.

3. Ultrasonic sensor arrangement according to claim 2,
**characterized in that**
the surface (38) of the indentation (37) is configured to have a smaller curvature than the front side (32) of the ultrasonic sensor (1).

4. Ultrasonic sensor arrangement according to claim 2,
**characterized in that**
the curvature of the surface (38) of the indentation (37) is configured to be complementary to the curvature of the front side (32) of the ultrasonic sensor (1) so that the front side (32) contacts the entire surface (38) of the indentation (37).

5. Ultrasonic sensor arrangement according to any one of the preceding claims, **characterized in that**
the ultrasonic sensor (1) has a longitudinal axis (39, 39a), which is arranged to be tilted at an angle (α) larger than 0° relative to the horizontal (40), in particular at an angle of 1° to 4°.

6. Ultrasonic sensor arrangement according to any one of the preceding claims, **characterized in that**
a maximum thickness (dₘₐₓ) of the cladding part (34) lies within a value range of 2.8 mm to 3.2 mm.

7. Ultrasonic sensor arrangement according to any one of the preceding claims, **characterized in that**
a minimum thickness (dₘᵢₙ) of the cladding part (34) lies within a value range of 1.8 mm to 2.2 mm.

8. Ultrasonic sensor arrangement according to any one of the preceding claims, **characterized in that**
a front side (35) of the cladding part (34) situated opposite the rear side (36) is configured to be flat.

9. Ultrasonic sensor arrangement according to any one of the preceding claims, **characterized in that**
the ultrasonic sensor (1) comprises an ultrasonic transducer (2) comprising a pot-shaped membrane (24) for emitting and/or receiving the ultrasonic waves as well as a holder (3) that is separate from the ultrasonic transducer (2), via which the ultrasonic transducer (2) is attached on the rear side (36) of the cladding part (34), wherein the front side (32) of the ultrasonic sensor (1) is formed by a front side (31) of the holder (3).

10. Ultrasonic sensor arrangement according to any one of the preceding claims, **characterized in that**
the cladding part (34) is a bumper.

11. Motor vehicle comprising an ultrasonic sensor arrangement according to any one of the preceding claims.

12. Method for manufacturing an ultrasonic sensor arrangement for a motor vehicle by way of providing a cladding part (34) and at least one ultrasonic sensor (1) comprising a front side (32), via which ultrasonic signals are emitted and/or received by the ultrasonic sensor (1), wherein on a rear side (36) of the cladding part (34) an indentation (37) is configured in that the cladding part (34) is configured with various thicknesses (dmax, dmin), and wherein the front side (32) of the ultrasonic sensor (1) is brought into contact with a surface (38) of the indentation (37) so that the ultrasonic sensor (1) emits and/or receives the ultrasonic sensors through the cladding part (34), **characterized in that**
the surface (38) of the indentation (37) is convex curved and the surface (38) of the indentation (37) is configured as surface area of a ball so that the ultrasonic sensor (1) can be placed at various inclination angles in order to be able to be arranged with its longitudinal axis tilted relative to the horizontal.

13. Method according to claim 12,
**characterized in that**
the cladding part (34) is configured as injection-moulded part and the indentation (37) is formed by injection moulding.

14. Method according to claim 12,
**characterized in that**
the indentation (37) is cut on the rear side (36) of the cladding (34).

## Revendications

1. Agencement de capteur à ultrasons pour un véhicule, avec une partie habillage (34) et au moins un capteur à ultrasons (1), lequel présente une face frontale (32) et qui est constitué pour émettre et /ou recevoir des signaux à ultrasons par l'intermédiaire de la face frontale (32), un creux (37) étant constitué sur une face arrière (36) de la partie habillage (34) et la partie habillage (34) présentant des épaisseurs différentes (dₘₐₓ, dₘᵢₙ) dans le secteur du creux (37) et la face frontale (32) du capteur à ultrasons (1) étant mise en contact avec une superficie (38) du creux (37), de sorte que le capteur à ultrasons (1) est constitué pour émettre et / ou recevoir les signaux à ultrasons à travers la partie habillage (34),
**caractérisé en ce que**
la superficie (38) du creux (37) est constituée courbée de manière concave et la superficie (38) du creux (37) est constituée en tant que zone de superficie d'une sphère, de sorte que le capteur à ultrasons (1) peut être mis en place suivant différents angles d'inclinaison, pour pouvoir être agencé incliné à l'horizontale avec son axe longitudinal.

2. Agencement de capteur à ultrasons selon la revendication 1, **caractérisé en ce que**
la face frontale (32) du capteur à ultrasons (1) est constituée courbée de manière convexe.

3. Agencement de capteur à ultrasons selon la revendication 2, **caractérisé en ce que**
la superficie (38) du creux (37) est constituée avec une courbure plus petite que celle de la face frontale (32) du capteur à ultrasons (1).

4. Agencement de capteur à ultrasons selon la revendication 2, **caractérisé en ce que**
la courbure de la superficie (38) du creux (37) est constituée en complément de la courbure de la face frontale (32) du capteur à ultrasons (1), de sorte que la face frontale (32) appuie sur toute la surface sur la superficie (38) du creux (37).

5. Agencement de capteur à ultrasons selon l'une des revendications précédentes,
**caractérisé en ce que**
le capteur à ultrasons (1) présente un axe longitudinal (39, 39a), lequel est agencé incliné suivant un angle (α) supérieur à 0° par rapport à une horizontale (40), en particulier suivant un angle d'1° à 4°.

6. Agencement de capteur à ultrasons selon l'une des revendications précédentes,
**caractérisé en ce**
**qu'**une épaisseur maximale (dₘₐₓ) de la partie habillage (34) se trouve dans une plage de valeurs de 2,8 mm à 3,2 mm.

7. Agencement de capteur à ultrasons selon l'une des revendications précédentes,
**caractérisé en ce**
**qu'**une épaisseur minimale (dₘᵢₙ) de la partie habillage (34) se trouve dans une plage de valeurs d'1,8 mm à 2,2 mm.

8. Agencement de capteur à ultrasons selon l'une des revendications précédentes,
**caractérisé en ce**
**qu'**une face avant (35), opposée à la face arrière (36), de la partie habillage (34) est constituée plane.

9. Agencement de capteur à ultrasons selon l'une des revendications précédentes,
**caractérisé en ce que**
le capteur à ultrasons (1) présente un transducteur à ultrasons (2), avec une membrane (24) en forme de pot, destinée à émettre et / ou à recevoir les ondes à ultrasons, ainsi qu'un support (3), séparé du transducteur à ultrasons (2), par l'intermédiaire duquel le transducteur à ultrasons (2) est fixé sur la face arrière (36) de la partie habillage (34), la face frontale (32) du capteur à ultrasons (1) étant formée par le biais d'une face avant (31) du support (3).

10. Agencement de capteur à ultrasons selon l'une des revendications précédentes,
**caractérisé en ce que**
la partie habillage (34) est un pare-chocs.

11. Véhicule avec un agencement de capteur à ultrasons selon l'une des revendications précédentes.

12. Procédé de fabrication d'un agencement de capteur à ultrasons pour un véhicule, par le biais de la mise à disposition d'une partie habillage (34) et d'au moins un capteur à ultrasons (1), avec une face frontale (32), par l'intermédiaire de laquelle des signaux à ultrasons sont émis et / ou reçus par le biais du capteur à ultrasons (1), un creux (37) étant constitué sur une face arrière (36) de la partie habillage (34), en constituant la partie habillage (34) avec différentes épaisseurs (dₘₐₓ, dₘᵢₙ) et la face frontale (32) du capteur à ultrasons (1) étant mise en contact avec une superficie (38) du creux (37), de sorte que le capteur à ultrasons (1) émet et / ou reçoit les signaux à ultrasons par le biais de la partie habillage (34),
**caractérisé en ce que**
la superficie (38) du creux (37) est courbée de manière concave et la superficie (38) du creux (37) est constituée en tant que zone de superficie d'une sphère, de sorte que le capteur à ultrasons (1) peut être mis en place suivant différents angles d'inclinaison, pour pouvoir être agencé incliné à l'horizontale avec son axe longitudinal.

13. Procédé selon la revendication 12,
**caractérisé en ce que**
la partie habillage (34) est constituée en tant que pièce moulée par injection et le creux (37) est formé par moulage par injection.

14. Procédé selon la revendication 12,
**caractérisé en ce que**
le creux (37) est fraisé sur la face arrière (36) de la partie habillage (34).
